**Europäisches Patentamt**

(19) **European Patent Office**

**Office européen des brevets**

(11) Veröffentlichungsnummer: **0 088 232
B1**

(12) **EUROPÄISCHE PATENTSCHRIFT**

(45) Veröffentlichungstag der Patentschrift: **27.12.85**

(51) Int. Cl.⁴: **F 16 D 59/02**

(21) Anmeldenummer: **83100995.6**

(22) Anmeldetag: **03.02.83**

(54) **Schaltelement, insbesondere Federdruckbremse oder -Kupplung.**

(30) Priorität: **08.03.82 DE 3208248**

(43) Veröffentlichungstag der Anmeldung:
**14.09.83 Patentblatt 83/37**

(45) Bekanntmachung des Hinweises auf die Patenterteilung:
**27.12.85 Patentblatt 85/52**

(84) Benannte Vertragsstaaten:
**DE FR GB IT SE**

(56) Entgegenhaltungen:
**DE - A - 2 814 200
DE - A - 2 841 207
FR - A - 2 439 907**

(73) Patentinhaber: **Maschinenfabrik Stromag GmbH,
Hansastrasse 120, D-4750 Unna (DE)**

(72) Erfinder: **Funk, Johannes, Dipl.-Ing.,
D-5758 Fröndenberg (DE)**

(74) Vertreter: **Wilhelm, Hans-Herbert, Dr.-Ing. et al, Wilhelm
& Dauster Patentanwälte Hospitalstrasse 8,
D-7000 Stuttgart 1 (DE)**

## Beschreibung

Die Erfindung betrifft ein Schaltelement, insbesondere eine Federdruckbremse oder -Kupplung nach dem Oberbegriff des Anspruches 1. Eine Federdruckbremse dieser Art ist in dem FR-A-2 439 907 beschrieben.

Derartige Schaltelemente werden druckmittelbetätigbar ausgebildet. Die Wirkverbindung zwischen Antriebs- und Abtriebsseite wird über Lamellen erreicht, die von Druckfedern zusammengedrückt werden, die zu einem Kolben geführt sind, der vom Druckmittel gegen die Kraft der Druckfedern beraufschlagbar ist und so die Anpreßkräfte an den Lamellen aufhebt.

Die bei den bekannten Schaltelementen verwendeten einstückigen Kolben besitzen den Nachteil, daß ein relativ großer Arbeitsaufwand zur Fertigung der die Druckfedern aufnehmenden Bohrungen notwendig ist. Die Bohrungen müssen nach dem Bohren nicht nur auf Maß abgesenkt werden, sondern auch noch jeweils eine Kleinbohrung erhalten, die auch noch entgratet werden muß, um die Behandlung der Kolbenoberfläche mit einer besonderen Schutzschicht zu ermöglichen.

Aufgabe der Erfindung ist es, den Arbeitsaufwand zur Herstellung eines solchen Schaltelementes zu verringern, ohne dessen Funktionstüchtigkeit dadurch einzuschränken.

Die Erfindung besteht in den Merkmalen des Anspruches 1. Nach dem Grundgedanken der Erfindung besteht der Kolben daher aus zwei Teilen, die unabhängig voneinander herstellbar sind. Der innere, als Federführungsteil ausgebildete Teil kann daher, da er keine großen Kräfte aufzunehmen oder zu übertragen hat, aus einem nicht mehr nachzubearbeitenden Material, beispielsweise aus Kunststoff hergestellt werden. Der innere Teil muß dann nur noch in den äußeren Teil, der hierfür einen Aufnahmeraum besitzt, eingesetzt werden.

Bei einer sehr vorteilhaften Weiterbildung der Erfindung werden die Ausnehmungen durchgehend über die Länge des Federführungsteils ausgebildet und es werden die Abstützflächen für die Druckfedern zu einer Seite hin durch einen am Kolbenteil vorgesehenen Kragen gebildet. Die Ausnehmungen im Federführungsteil müssen daher nicht mehr auf Maß gesenkt werden, sondern können z. B. auch als Durchgangsbohrungen sehr einfach hergestellt werden. Den Anschlag für die eingelegten Druckfedern bildet dann ein am Kolbenteil vorgesehener umlaufender Kragen. Dabei können die Abmessungen des Kragens vorteilhaft auf jene der Ausnehmungen so abgestimmt sein, daß die Ausnehmungen stirnseitig nicht ganz durch den Kragen verschlossen werden. Damit ist sichergestellt, daß noch eine Öffnung erhalten bleibt, die eine Oberflächenbehandlung der Kolbenoberflächen ermöglicht, ohne daß hierfür Bohrungen in einem gesonderten Arbeitsgang notwendig sind.

Es besteht auch die Möglichkeit, die Ausnehmungen im Federführungsteil zu einer Seite hin in radialer Richtung offen auszubilden. Die offene Seite kann sowohl zur Außenseite hinweisen, als auch zur Innenseite des Federführungsteils.

Im ersten Fall besteht dann eine Innenverbindung, d. h. der Federführungsteil wird über einen radial innen umlaufenden, durchgehenden Steg zusammengehalten, im zweiten Fall besteht entsprechend ein radial außen umlaufender, durchgehender Steg.

Da die zweiteilige Ausbildung des Kolbens die Möglichkeit schafft, die Materialien für den Kolbenteil und den Federführungsteil unabhängig voneinander zu wählen, besteht die Möglichkeit, den Federführungsteil beispielsweise aus Aluminium, Silumin, Kunststoff als Blechteil, aus Druckguß, aber auch als Ziehteil oder Spritzteil herzustellen. Es ist aber auch möglich, den Federführungsteil als Faltelement, vorzugsweise aus elastischem Material herzustellen, welches dann umgebogen und die entsprechende Ausnehmung im Kolbenteil eingesetzt werden kann. In beiden Fällen brauchen keine spanabhebenden Bearbeitungen vorgenommen zu werden.

Die Erfindung wird im folgenden anhand der in den Figuren gezeigten Ausführungsbeispielen weiter erläutert und beschrieben. Es zeigt

Fig. 1 den prinzipiellen Aufbau eines Schaltelementes mit einem erfindungsgemäßen Druckkolben im Längsschnitt entlang der Kolbenachse,

Fig. 2 einen erfindungsgemäßen Kolben im Längsschnitt in Explosionsdarstellung,

Fig. 3 eine Stirnansicht auf einen Federführungsteil der Fig. 2 und

Fig. 4a und 4b jeweils ein weiteres Ausführungsbeispiel für einen erfindungsgemäßen Federführungsteil in einem Querschnitt senkrecht zur Kolbenachse.

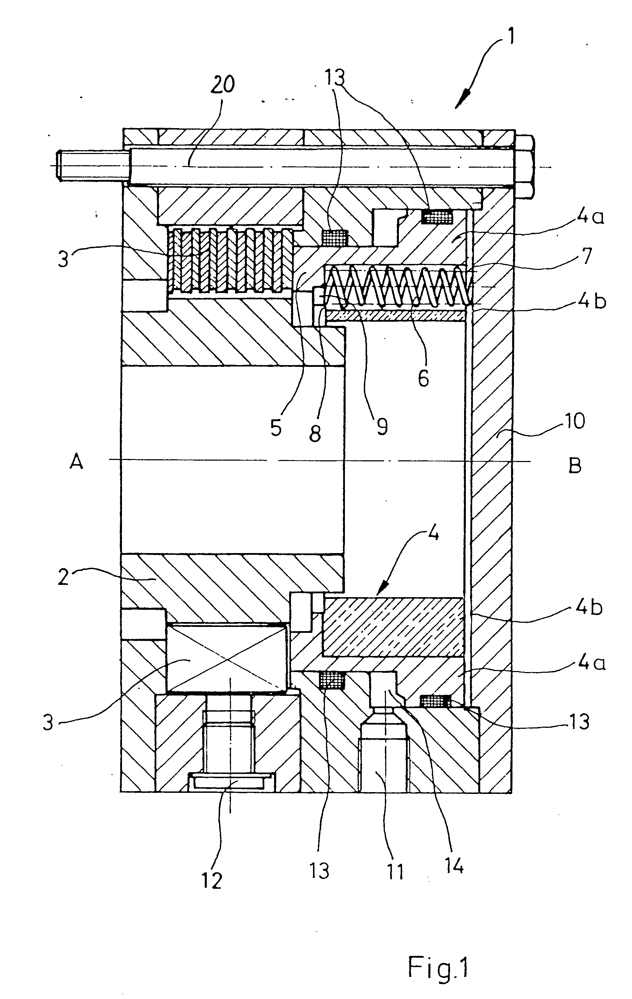

In Fig. 1 ist ein Schaltelement 1 gezeigt, welches als Federdruckbremse ausgebildet ist. Die Verbindung zwischen der Antriebsseite A, zu der die Nabe 2 gehört, in die eine nicht näher gezeigte Welle eingreifen kann, und der Abtriebsseite B, die über die Schraubbolzen 20 an ein nicht dargestelltes rotierendes Teil anschließbar ist, wird über Lamellen 3 hergestellt, wobei je nach der auf die Lamellen ausgeübten Andrückkraft eine mehr oder weniger große Wirkverbindung zustande kommt. Zur Erzeugung der Andrückkraft auf die Lamellen dienen die Druckfedern 6, für die zylindrische Ausnehmungen 7 in einem Kolben 4 vorgesehen sind. Die Druckfedern stützen sich am Deckel 10 einseitig ab und wirken über einen Kragen 9 auf den Kolben 4, so daß ein an diesem vorgesehener Absatz 5 entsprechend auf die Lamellen 3 drückt. Die Gegenkraft und damit das Lösen der Wirkverbindung zwischen Antriebs- und Abtriebsseite A bzw. B wird mit Hilfe eines Druckmediums, z. B. Drucköl erreicht, das in einem umlaufenden Druckraum 14 über einen Druckanschluß 11 eingeleitet werden kann. Die von dem Druckmedium auf den Kolben 4 ausgeübte Kraft wirkt entgegen der Kraft der Druckfedern 6.

Der Kolben 4 besteht aus einem radial innenliegenden Teil 4b, dem Federführungsteil, und einem radial äußeren Teil, dem Kolbenteil 4a. Die Außenmaße des Federführungsteils 4b sind auf den Innendurchmesser des Kolbenteils 4a abgestimmt, so daß sich der Federführungsteil in den Kolbenteil 4a einsetzen läßt.

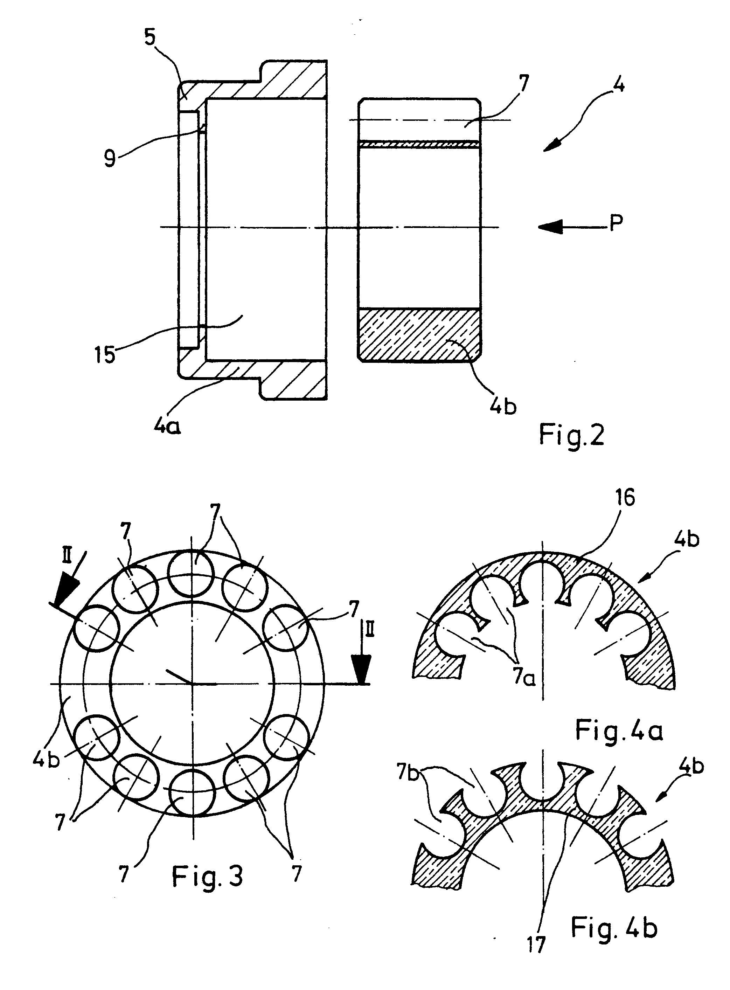

Aus Fig. 2 ist dies zu erkennen. Die zylindrischen Ausnehmungen 7 im Federführungsteil 4 b sind durchgehend. Eine Nachbearbeitung — wie zum Beispiel ein Einsenken der Bohrung auf Maß, wie beim Stand der Technik, ist überflüssig. Der Anschlag bzw. die Abstützfläche für die in die Ausnehmungen 7 einsetzbaren Druckfedern 6 wird durch den Kragen 9 gebildet, der in seinen Abmessungen so auf den Federführungsteil 4b abgestimmt ist, daß, nachdem dieser in den Aufnahmeraum 15 in Pfeilrichtung P eingesetzt worden ist, eine Öffnung 8 (vgl. Fig. 1) verbleibt, durch die dann eine nachträgliche Oberflächenbehandlung des Kolbens möglich ist.

Es ist ohne weiteres möglich, den Federführungsteil 4b und den Kolbenteil 4a aus unterschiedlichen Materialien herzustellen. Da der Federführungsteil lediglich zur Führung der Druckfedern 6 vorgesehen ist, muß er keine hohen Druckbelastungen aushalten. Er kann daher beispielsweise aus Aluminium, Silumin, Kunststoff, aus Blechteilen oder aus Druckguß gefertigt werden. Wenn er als Ziehteil oder Spritzteil gefertigt wird, werden die Ausnehmungen 7 in einem Arbeitsgang mit hergestellt.

Die radiale Anordnung der Ausnehmungen 7 kann verschieden erfolgen. Ein Beispiel zeigt Fig. 3, in der eine Draufsicht in Pfeilrichtung P der Fig. 2 auf den dort gezeigten Federführungsteil 4b dargestellt ist. Die Ausnehmungen 7 sind nach außen gerückt und schließen mit dem Außenrand des Federführungsteils 4b ab. Der Federführungsteil 4b kann als stabiler Körper ausgebildet sein; die Erfindung schafft jedoch auch die Möglichkeit, den Federführungsteil 4b als Faltelement zu konstruieren, wie dies in Fig. 4a und 4b dargestellt ist. Als Material wird dann ein elastisches Material verwendet, das nach geeigneter Formung gebogen und in den Aufnahmeraum 15 eingesetzt werden kann.

Wie aus den Fig. 4a und 4b ebenfalls zu erkennen ist, können die Ausnehmungen zu einer Seite hin in radialer Richtung offen ausgebildet sein, d. h. mit den Öffnungen 7a zur Innenseite hin wie in Fig. 4a dargestellt, oder mit Öffnungen 7b zur Außenseite hin, wie das in Fig. 4b gezeigt ist. Zusammengehalten werden die Federführungsteile dann entweder über einen Außensteg 16 oder entsprechend über einen Innensteg 17.

Da die umständliche und aufwendige Fertigung des Kolbens bekannter Bauarten durch die Erfindung umgangen werden kann, lassen sich solche Schaltelemente insgesamt einfacher herstellen, ohne daß dadurch die Funktionstüchtigkeit beeinträchtigt wird.

## Patentansprüche

1. Schaltelement, insbesondere Federdruckbremse oder -/Kupplung, das eine Wirkverbindung zwischen einer Antriebs- und einer Abtriebsseite über von einem Kolben (4) beaufschlagte Lamellen (3) herstellt, der druckmittelbeaufschlagt gegen die Wirkung von Druckfedern (6) betätigbar ist, die im Kolben (4) geführt ist, dadurch gekennzeichnet, daß der Kolben (4) aus zwei ineinanderliegenden Teilen besteht, von denen der äußere Teil (4a) den Kolbenteil zur Übertragung der Druckkräfte auf die Lamellen bildet und einen Aufnahmeraum (15) für den inneren Teil (4b) aufweist, der als Federführungsteil mit Ausnehmungen (7) zur Aufnahme der Druckfedern (6) versehen ist.

2. Schaltelement nach Anspruch 1, dadurch gekennzeichnet, daß die Ausnehmungen (7) durchgehend über die Länge des Federführungsteils (4b) ausgebildet sind und die Abstützflächen für die Druckfedern (6) zu einer Seite hin durch einen am Kolbenteil (4a) vorgesehenen Kragen (9) gebildet sind.

3. Schaltelement nach Anspruch 2, dadurch gekennzeichnet, daß die Abmessungen des Kragens (9) und der Ausnehmungen (7) so aufeinander abgestimmt sind, daß eine Öffnung (8) auf der am Kragen (9) anliegenden Ausnehmungsseite verbleibt.

4. Schaltelement nach einem der vorangegangenen Ansprüche, dadurch gekennzeichnet, daß die Ausnehmungen (7) im Federführungsteil (4b) zu einer Seite hin in radilaer Richtung offen (Öffnungen 7a, 7b) sind.

5. Schaltelement nach einem der vorangegangenen Ansprüche, dadurch gekennzeichnet, daß die Ausnehmungen (7) zum Außenumfang des Federführungsteils (4b) hin offen sind.

6. Schaltelement nach einem der Ansprüche 1 bis 4, dadurch gekennzeichnet, daß die Ausnehmungen (7) zum Innenumfang des Federführungsteils (4b) hin offen (7a) sind.

7. Schaltelement nach einem der vorangegangenen Ansprüche, dadurch gekennzeichnet, daß der Federführungsteil (4b) einstückig als Druckguß-, Zieh- oder Spritzteil hergestellt ist.

8. Schaltelement nach einem der Ansprüche 1 bis 6, dadurch gekennzeichnet, daß der Federführungsteil (4b) als Faltelement aus elastischem Material hergestellt ist.

## Claims

1. An operating element, particularly a spring-pressure brake or clutch, which establishes an operative connection between a driving side and a driven side through plates (3) which are acted upon by a piston (4) which, when acted upon by pressure fluid, can be actuated against the action of compression springs (6) which are guided in the piston (4), characterised in that the piston (4) consists of two portions situated one inside the other, of which the outer portion (4a) forms the portion of the piston for transmitting compressive forces to the plates and comprises a space (15) to receive the inner portion (4b) which, as the spring guiding portion, is provided with recesses (7) to receive the compression springs (6).

2. An operating element as claimed in Claim 1, characterised in that the recesses (7) pass through the whole length of the spring guiding portion (4b) and the supporting surfaces for the compression springs (6) at one side are formed by a collar (9) provided on the piston portion (4a).

3. An operating element as claimed in Claim 2, characterised in that the dimensions of the collar (9) and of the recesses (7) are adapted to one another so that an opening (8) remains at the side of the recess adjacent to the collar (9).

4. An operating element as claimed in one of the preceding Claims, characterised in that the recesses (7) in the spring guiding portion (4b) are open towards one side in the radial direction (openings 7a, 7b).

5. An operating element as claimed in one of the preceding Claims, characterised in that the recesses (7) are open towards the outer circumference of the spring guiding portion (4b).

6. An operating element as claimed in one of the Claimes 1 to 4, characterised in that the recesses (7) are open towards the inner circumference of the spring guiding portion (4b) 7a).

7. An operating element as claimed in one of the preceding Claims, characterised in that the spring guiding portion (4b) is made in one piece as a die-cast, drawn or injection-moulded part.

8. An operating element as claimed in one of the Claimes 1 to 6, characterised in that the spring guiding portion (4b) is made of resilient material as a folding element.

## Revendications

1. Elément de commande, en particulier, frein ou embrayage à pression de ressort comprenant une connexion qui effectue l'effet d'accouplement entre le côté de commande et le côté de sortie au moyen d'un piston (4) muni des ressorts qui pressent les disques (3), un moyen produisant une pression qui agit contre l'effet des ressorts de pression (6) lequel est conduit vers le piston (4), caractérisé en ce que le piston (4) est composé de deux parties qui s'assemblent l'une dans l'autre, dont l'une des parties, la chemise du piston, forme la partie extérieure (4a) et est destinée à communiquer les forces de pression sur les disques et l'autre partie présente une chambre de logement (15) dans laquelle s'introduit la partie intérieure (4b) qui constitue la partie de guidage des ressorts où se trouvent les évidements (7) prévus pour recevoir les ressorts de pression (6).

2. Elément de commande selon la revendication 1, caractérisé en ce que dans la partie de guidage des ressorts, sont formés les évidements (7) qui s'allongent de bout en bout de celle-ci et la surface d'appui des ressorts de pression (6) étant constituée par un de côtés d'une collerette (9) entourant l'intérieur de la partie (4a) de la chemise du piston.

3. Elément de commande selon la revendication 2, caractérisé en ce que les dimensions de la collerette (9) et les évidements sont ajustés l'un sur l'autre d'une façon synchronisée de manière telle qu'il reste une ouverture (8) contiguë aux côtés des évidements et de la collerette (9).

4. Elément de commande selon l'une des revendications précédentes, caractérisé en ce que les évidements (7) de la partie de guidage des ressorts (4b) sont ouverts suivant une direction radiale d'un des côtés de celles-ci (ouvertures 7a, 7b).

5. Elément de commande selon l'une des revendications précédentes, caractérisé en ce que les évidements (7) sont ouverts autour du pourtour extérieur de la partie de guidage des ressorts (4b).

6. Elément de commande selon l'une des revendications 1 à 4, caractérisé en ce que évidements (7) sont ouverts autour du pourtour intérieur de la partie de guidage des ressorts (4b) où se trouvent les susdits évidements (7a).

7. Elément de commande selon l'une des revendications précédentes, caractérisé en ce que la partie de guidage des ressorts (4b) est fabriquée d'une seule pièce obtenue par un procédé tel que moulage sous pression, emboutissage ou moulage par injection.

8. Elément de commande selon les revendications 1 à 6, caractérisé en ce que la partie de guidage des ressorts (4b) est fabriquée en un élément pliable à partir d'un matériau élastique.

Fig.1

Fig.2

Fig.3

Fig.4a

Fig.4b